# EUROPEAN PATENT SPECIFICATION

(11) **EP 3 640 279 B1**
(45) Date of publication and mention of the grant of the patent: **17.02.2021**
(21) Application number: 18200711.2
(22) Date of filing: 16.10.2018
(51) Int. Cl.: C08G 65/40, C08G 65/44, C08G 65/46, C08G 65/48

(54) **HIGH MOLECULAR WEIGHT POLY(PHENYLENE ETHER) AND PROCESS FOR THE PREPARATION THEREOF**
HOCHMOLEKULARER POLY(PHENYLENETHER) UND VERFAHREN ZUR HERSTELLUNG DAVON
POLY(PHÉNYLÈNE ÉTHER) À POIDS MOLÉCULAIRE ÉLEVÉ ET SON PROCÉDÉ DE PRÉPARATION

(43) Date of publication of application: 22.04.2020
(73) Proprietor: SHPP Global Technologies B.V., 4612 PX Bergen op Zoom (NL)
(72) Inventor: TARKIN-TAS, Eylem, Selkirk, NY 12158 (US); DAI, Jianguo, Selkirk, NY 12158 (US)
(74) Representative: Lang, Johannes

(56) References cited:
- WO-A1-2007/058779
- WO-A1-2016/200791
- WO-A1-2017/105682
- US-A- 4 058 504
- US-A- 4 116 939
- US-A1- 2003 053 591

## Description

### BACKGROUND

Poly(phenylene ether) is known for its excellent water resistance, dimensional stability, and inherent flame retardancy, as well as high oxygen permeability and oxygen/nitrogen selectivity. Properties such as strength, stiffness, chemical resistance, and heat resistance can be tailored by blending with various other polymers in order to meet the requirements of a wide variety of consumer products, for example, plumbing fixtures, electrical boxes, automotive parts, and insulation for wire and cable.

A commercially relevant poly(phenylene ether) is poly(2,6-dimethyl-1,4-phenylene ether), which is prepared on a large scale by the oxidative polymerization of 2,6-dimethylphenol (also known as 2,6-xylenol). For certain product applications, very high molecular weight poly(2,6 dimethyl-1,4-phenylene ether)s are needed. Not only must the average molecular weight be very high, but the sample should preferably have a small weight percent of low molecular weight polymer chains.

WO 2016/200791 A1 discloses a method of making a poly(phenylene ether) comprising: in an exotherm period, continuous addition of oxygen and a monohydric phenol at a specific mole ratio to a non-polar solvent and a polymerization catalyst comprising a metal salt, an amine, and a quaternary ammonium salt in a vessel, to form a polymerization mixture; and cessation of the continuous addition of the monohydric phenol; and in a build period, continuation of oxygen addition until there is no further increase in viscosity of the polymerization mixture. US 4 058 504 A refers to a process for preparing polyphenylene ethers by oxidative polycondensation of phenols in the presence of a complex catalyst, wherein an aminocarboxylic acid derivative and a reducing agent are simultaneously added to the reaction mixture when the resulting polyphenylene ether has attained the desired degree of polymerization, thereby to terminate the polymerization and simultaneously purify the reaction mixture. WO 2017/105682 A1 is directed to a method of forming a phenylene ether oligomer that comprises partially converting 2,6-dimethylphenol to 3,3',5,5'-tetramethyl-4,4' dihydroxybiphenyl and/or 3,3',5,5'-tetramethyldiphenoquinone, converting the residual 2,6 dimethylphenol to poly(2,6-dimethyl-1,4-phenylene ether) and any 3,3',5,5'-tetramethyl-4,4'-dihydroxybiphenyl to 3,3',5,5'-tetramethyldiphenoquinone, and reacting the poly(2,6-dimethyl-1,4-phenylene ether) and 3,3',5,5'-tetramethyldiphenoquinone to form the phenylene ether oligomer. WO 2007/058779 A1 relates to method of preparing a poly(arylene ether) resin, comprising: oxidatively copolymerizing a monohydric phenol and a polyhydric phenol in an aromatic hydrocarbon solvent in the presence of a catalyst comprising a metal ion and a nitrogen-containing ligand to form a solution comprising a polyfunctional poly(arylene ether) of a specific viscosity; and contacting the polyfunctional poly(arylene ether) solution with an aqueous solution with a specific concentration of a chelating agent to extract the metal ion from the solution. US 2003/0053591 A1 discloses a process for producing a poly(arylene ether), comprising oxidatively coupling a monohydric phenol in the presence of a solvent and a catalyst to form a soluble poly (arylene ether) and an insoluble poly(arylene ether), separating the soluble poly (arylene ether) and the insoluble poly(arylene ether), and recycling the soluble poly (arylene ether).

There is therefore a need for poly(phenylene ether)s that have but a high number average molecular weight and a reduced fraction of low molecular weight molecules. There is also a need for improved, commercially scalable, and environmentally acceptable processes for producing such poly(phenylene ether)s.

### Brief Description

A method for preparing a poly(phenylene ether) according to claim 1 comprises oxidatively polymerizing a poly(phenylene ether) starting material having an initial intrinsic viscosity in the presence of an organic solvent and a copper-amine catalyst to form a reaction mixture comprising a poly(phenylene ether) having a final intrinsic viscosity that is at least 50% greater than the initial intrinsic viscosity; terminating the oxidative polymerization to form a post-termination reaction mixture; combining an aqueous solution comprising a chelant comprising an alkali metal salt of an aminocarboxylic acid with the post-termination reaction mixture to form a chelation mixture comprising an aqueous phase comprising chelated copper ion, and an organic phase comprising dissolved poly(phenylene ether); separating the aqueous phase and the organic phase; and isolating the poly(phenylene ether) from the organic phase.

A poly(phenylene ether) made by the method and an article comprising the poly(phenylene ether) are also disclosed.

The above described and other features are exemplified by the following detailed description.

### DETAILED DESCRIPTION

The present inventors have advantageously discovered a process effective to produce poly(phenylene ether)s having a high molecular weight and high intrinsic viscosity. Accordingly, the present invention provides a method of preparing a poly(phenylene ether) according to claim 1, comprising oxidatively polymerizing a poly(phenylene ether) starting material having an initial intrinsic viscosity in the presence of an organic solvent and a copper-amine catalyst to form a reaction mixture comprising a poly(phenylene ether) having a final intrinsic viscosity that is at least 50% greater than the initial intrinsic viscosity; terminating the oxidative polymerization to form a post-termination reaction mixture; combining an aqueous solution comprising a chelant with the post-termination reaction mixture to form a chelation mixture comprising an aqueous phase comprising chelated copper ion, and an organic phase comprising dissolved poly(phenylene ether); separating the aqueous phase and the organic phase; and isolating the poly(phenylene ether) from the organic phase.

Advantageously, the poly(phenylene ether) starting material comprises a poly(phenylene ether) or a phenylene ether oligomer. The poly(phenylene ether) oligomer can have an intrinsic viscosity of less than 0.2, preferably less than 0.15, more preferably 0.12 or less, more preferably 0.1 or less. Intrinsic viscosity is determined using an Ubbelohde viscometer at 25°C in chloroform. The final intrinsic viscosity of the poly(phenylene ether) reaction product is at least 50% greater than the intrinsic viscosity of the phenylene ether oligomer starting material. For example, the final intrinsic viscosity can be greater than 0.20, preferably 0.25 to 0.60, or 0.3 to 0.5, or 0.3 to 0.45.

In some embodiments, the poly(phenylene ether) starting material is a poly(phenylene ether) having an intrinsic viscosity of 0.4 to 1.0. The poly(phenylene ether) reaction product can have a final intrinsic viscosity of greater than or equal to 0.80, preferably 0.90 to 1.5.

The poly(phenylene ether) starting material can comprise repeating structural units having the formula 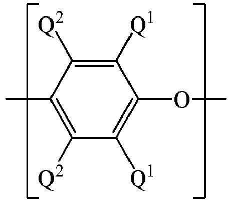 wherein each occurrence of Q¹ and Q² is independently halogen, unsubstituted or substituted C₁₋₁₂ hydrocarbyl provided that the hydrocarbyl group is not tertiary hydrocarbyl, C₁₋₁₂ hydrocarbylthio, C₁₋₁₂ hydrocarbyloxy, or C₂₋₁₂ halohydrocarbyloxy wherein at least two carbon atoms separate the halogen and oxygen atoms; and each occurrence of Q² is independently hydrogen, halogen, unsubstituted or substituted C₁₋₁₂ hydrocarbyl provided that the hydrocarbyl group is not tertiary hydrocarbyl, C₁₋₁₂ hydrocarbylthio, C₁₋₁₂ hydrocarbyloxy, or C₂₋₁₂ halohydrocarbyloxy wherein at least two carbon atoms separate the halogen and oxygen atoms.

In some embodiments, the poly(phenylene ether) starting material comprises a homopolymer or copolymer comprising repeating units derived from 2,6-dimethylphenol, 2,3,6-trimethylphenol, and combinations thereof. Preferably, the poly(phenylene ether) starting material comprises at least one phenolic end group per molecule. In some embodiments, the poly(phenylene ether) comprises an average of less than 2.0 phenolic end groups. In some embodiments, the poly(phenylene ether) comprises an average of 1.8 to less than 2.0 phenolic end groups per molecule.

Preferably, the oxidative polymerization of the poly(phenylene ether) starting material is conducted in the absence of a phenolic monomer. Stated another way, a phenolic monomer is excluded from the reaction mixture. In some embodiments, the presence of any phenolic monomers is limited to less than 1000 ppm, or less than 500 ppm, or less than 250 ppm, or less than 100 ppm, or less than 50 ppm, based on the total weight of the poly(phenylene ether) starting material.

The oxidative polymerization is conducted in the presence of an organic solvent. Suitable organic solvents can include alcohols, ketones, aliphatic and aromatic hydrocarbons, chlorohydrocarbons, nitrohydrocarbons, ethers, esters, amides, mixed ether-esters, sulfoxides, and the like, provided they do not interfere with or enter into the oxidation reaction. High molecular weight poly(phenylene ethers) can greatly increase the viscosity of the reaction mixture. Therefore, it is sometimes desirable to use a solvent system that will cause them to precipitate while permitting the lower molecular weight polymers to remain in solution until they form the higher molecular weight polymers. The organic solvent can comprise, for example, toluene, benzene, chlorobenzene, ortho-dichlorobenzene, nitrobenzene, trichloroethylene, ethylene dichloride, dichloromethane, chloroform, or a combination thereof. Preferred solvents include aromatic hydrocarbons. In some embodiments, the organic solvent comprises toluene, benzene, chlorobenzene, or a combination thereof, preferably toluene.

The poly(phenylene ether) starting material can be present in the oxidative polymerization reaction mixture in an amount of 3 to 10 weight percent, based on the total weight of the poly(phenylene ether) starting material and the solvent.

The oxidative polymerization is further conducted in the presence of a copper-amine catalyst. The copper source for the copper amine catalyst can comprise a salt of cupric or cuprous ion, including halides, oxides and carbonates. Alternatively, copper can be provided in the form of a pre-formed salt of an alkylene diamine ligand. Preferred copper salts include cuprous halides, cupric halides, and their combinations. Especially preferred are cuprous bromides, cupric bromides, and combinations thereof.

A preferred copper-amine catalyst comprises a secondary alkylene diamine ligand. Suitable secondary alkylene diamine ligands are described in U.S. Pat. No. 4,028,341 to Hay and are represented by the formula

R^{b}-NH-R^{a}-NH-R^{c}

wherein R^{a} is a substituted or unsubstituted divalent residue wherein two or three aliphatic carbon atoms form the closest link between the two diamine nitrogen atoms; and R^{b} and R^{c} are each independently isopropyl or a substituted or unsubstituted C₄₋₈ tertiary alkyl group. Examples of R^{a} include ethylene, 1,2-propylene, 1,3-propylene, 1,2-butylene, 1,3-butylene, 2,3-butylene, the various pentylene isomers having from two to three carbon atoms separating the two free valances, phenylethylene, tolylethylene, 2-phenyl-1,2-propylene, cyclohexylethylene, 1,2-cyclohexylene, 1,3-cyclohexylene, 1,2-cyclopropylene, 1,2-cyclobutylene, 1,2-cyclopentylene, and the like. Preferably, R^{a} is ethylene. Examples of R^{b} and R^{c} can include isopropyl, t-butyl, 2-methyl-but-2-yl, 2-methyl-pent-2-yl, 3-methyl-pent-3-yl, 2,3-dimethyl-buty-2-yl, 2,3-dimethylpent-2-yl, 2,4dimethyl-pent-2-yl, 1-methylcyclopentyl, 1-methylcyclohexyl and the like. A highly preferred example of R^{b} and R^{c} is t-butyl. An exemplary secondary alkylene diamine ligand is N,N'-di-t-butylethylenediamine (DBEDA). Suitable molar ratios of copper to secondary alkylene diamine are from 1:1 to 1:5, preferably 1:1 to 1:3, more preferably 1:1.5 to 1:2.

The preferred copper-amine catalyst comprising a secondary alkylene diamine ligand can further comprise a secondary monoamine. Suitable secondary monoamine ligands are described in commonly assigned U.S. Pat. No. 4,092,294 to Bennett et al. and represented by the formula

R^{d}-NH-R^{e}

wherein R^{d} and R^{e} are each independently substituted or unsubstituted C₁₋₁₂ alkyl groups, and preferably substituted or unsubstituted C₃₋₆ alkyl groups. Examples of the secondary monoamine include di-n-propylamine, di-isopropylamine, di-n-butylamine, di-sec-butylamine, di-t-butylamine, N-isopropyl-t-butylamine, N-sec-butyl-t-butylamine, di-n-pentylamine, bis(1,1-dimethylpropyl)amine, and the like. A highly preferred secondary monoamine is di-n-butylamine (DBA). A suitable molar ratio of copper to secondary monoamine is from 1:1 to 1:10, preferably 1:3 to 1: 8, and more preferably 1:4 to 1:7.

The preferred copper-amine catalyst comprising a secondary alkylene diamine ligand can further comprise a tertiary monoamine. Suitable tertiary monoamine ligands are described in the abovementioned Hay U.S. Pat. No. 4,028,341 and Bennett U.S. Pat. No. 4,092,294 patents and include heterocyclic amines and certain trialkyl amines characterized by having the amine nitrogen attached to at least two groups which have a small cross-sectional area. In the case of trialkylamines, it is preferred that at least two of the alkyl groups be methyl with the third being a primary C₁₋₈ alkyl group or a secondary C₃₋₈ alkyl group. It is especially preferred that the third substituent have no more than four carbon atoms. A highly preferred tertiary amine is dimethylbutylamine (DMBA). A suitable molar ratio of copper to tertiary amine is less than 1:20, preferably less than 1:15, preferably 1:1 to less than 1:15, more preferably 1:1 to 1:12.

A suitable molar ratio of copper-amine catalyst (measured as moles of metal) to poly(phenylene ether) oligomer starting material is 1:50 to 1:400, preferably 1:100 to 1:200, more preferably 1:100 to 1:180.

The reaction conducted in the presence of a copper-amine catalyst can optionally be conducted in the presence of bromide ion. It has already been mentioned that bromide ion can be supplied as a cuprous bromide or cupric bromide salt. Bromide ion can also be supplied by addition of a 4-bromophenol, such as 2,6-dimethyl-4-bromophenol. Additional bromide ion can be supplied in the form of hydrobromic acid, an alkali metal bromide, or an alkaline earth metal bromide. Sodium bromide and hydrobromic acid are highly preferred bromide sources. A suitable ratio of bromide ion to copper ion is 2 to 20, preferably 3 to 20, more preferably 4 to 7.

In some embodiments, each of the above described components of the copper-amine catalyst are added to the oxidative polymerization reaction at the same time.

The oxidative polymerization can optionally further be conducted in the presence of one or more additional components, including a lower alkanol or glycol, a small amount of water, or a phase transfer agent. It is generally not necessary to remove reaction byproduct water during the course of the reaction. In some embodiments, a phase transfer agent is present. Suitable phase transfer agents can include, for example, a quaternary ammonium compound, a quaternary phosphonium compound, a tertiary sulfonium compound, or a combination thereof. Preferably, the phase transfer agent can be of the formula (R³)₄Q⁺X, wherein each R³ is the same or different, and is a C₁₋₁₀ alkyl; Q is a nitrogen or phosphorus atom; and X is a halogen atom or a C₁₋₈ alkoxy or C₆₋₁₈ aryloxy. Exemplary phase transfer catalysts include (CH₃(CH₂)₃)₄NX, (CH₃(CH₂)₃)₄PX, (CH₃(CH₂)₅)₄NX, (CH₃(CH₂)₆)₄NX, (CH₃(CH₂)₄)₄NX, CH₃(CH₃(CH₂)₃)₃NX, and CH₃(CH₃(CH₂)₂)₃NX, wherein X is Cl⁻, Br⁻, a C₁₋₈ alkoxy or a C₆₋₁₈ aryloxy. An effective amount of a phase transfer agent can be 0.1 to 10 wt%, or 0.5 to 2 wt%, each based on the weight of the reaction mixture. In a specific embodiment, a phase transfer agent is present and comprises *N,N,N'N'*-didecyldimethyl ammonium chloride.

The oxidative polymerization can be conducted at a temperature of 20 to 70°C, preferably 30 to 60°C, more preferably 45 to 55°C. Depending on the precise reaction conditions chosen, the total polymerization reaction time-that is, the time elapsed between initiating oxidative polymerization and terminating oxidative polymerization-can vary, but it is typically 120 to 250 minutes, specifically 145 to 210 minutes.

The method further comprises terminating the oxidative polymerization to form a post-termination reaction mixture. The reaction is terminated when the flow of oxygen to the reaction vessel is stopped. Residual oxygen in the reaction vessel headspace is removed by flushing with an oxygen-free gas, such as nitrogen.

After the polymerization reaction is terminated, the copper ion of the polymerization catalyst is separated from the reaction mixture. This is accomplished by combining a chelant with the post-termination reaction mixture to form a chelation mixture. The chelant comprises an alkali metal salt of an aminopolycarboxylic acid, preferably an alkali metal salt of an aminoacetic acid, more preferably an alkali metal salt of nitrilotriacetic acid, ethylene diamine tetraacetic acid, or a combination thereof, even more preferably a sodium salt of nitrilotriacetic, a sodium salt of ethylene diamine tetraacetic acid, or a combination thereof. In a specific embodiment, the chelant comprises an alkali metal salt of nitrilotriacetic acid. In some embodiments, the chelant is a sodium or potassium salt of nitrilotriacetic acid, specifically trisodium nitrilotriacetate. After agitation of the chelation mixture, that mixture comprises an aqueous phase comprising chelated copper ion and an organic phase comprising the dissolved poly(phenylene ether). The chelation mixture can exclude the dihydric phenol required by U.S. Pat. No. 4,110.311 to Cooper et al., the aromatic amine required by U.S. Pat. No. 4,116,939 to Cooper et al., and the mild reducing agents of U.S. Pat. No. 4,110.311 to Cooper et al., which include sulfur dioxide, sulfurous acid, sodium bisulfite, sodium thionite, tin(II) chloride, iron (II) sulfate, chromium (II) sulfate, titanium (III) chloride, hydroxylamines and salts thereof, phosphates, glucose, and mixtures thereof. The chelation mixture is maintained at a temperature of 40 to 55°C, specifically 45 to 50°C, for 5 to 100 minutes, specifically 10 to 60 minutes, more specifically 15 to 30 minutes. This combination of temperature and time is effective for copper sequestration while also minimizing molecular weight degradation of the poly(phenylene ether). The chelation step includes (and concludes with) separating the aqueous phase and the organic phase of the chelation mixture. This separation step is conducted at a temperature of 40 to 55°C, specifically 45 to 50°C. The time interval of 5 to 100 minutes for maintaining the chelation mixture at 40-55°C is measured from the time at which the post-termination reaction mixture is first combined with chelant to the time at which separation of the aqueous and organic phases is complete.

The method further comprises isolating the poly(phenylene ether) from the organic phase. Isolation can be by, for example, precipitation of the poly(phenylene ether) which can be induced by appropriate selection of reaction solvent described above, or by the addition of an anti-solvent to the reaction mixture. Suitable anti-solvents include lower alkanols having one to about ten carbon atoms, acetone and hexane. The preferred anti-solvent is methanol. The anti-solvent can be employed at a range of concentrations relative to the organic solvent, with the optimum concentration depending on the identities of the organic solvent and anti-solvent, as well as the concentration and intrinsic viscosity of the poly(phenylene ether) product. It has been discovered that when the organic solvent is toluene and the anti-solvent is methanol, a toluene:methanol weight ratio of 50:50 to 80:20 is suitable, with ratios of 60:40 to 70:30 being preferred, and 63:37 to 67:33 being more preferred. These preferred and more preferred ratios are useful for producing a desirable powder morphology for the isolated poly(phenylene ether) resin, without generating either stringy powder or excessive powder fines.

The method can optionally comprise pre-concentrating the reaction mixture prior to addition of the anti-solvent. Although it is not possible to pre-concentrate to as great a degree as for lower intrinsic viscosity poly(phenylene ether)s, pre-concentrations of, for example, 15 weight percent poly(phenylene ether) are possible. Any suitable method for pre-concentration can be employed. For example, the preconcentration can be carried out by preheating the solution above its atmospheric boiling point at a pressure modestly elevated above one atmosphere (so that no boiling takes place in the heat exchanger) followed by flashing the solution to a lower pressure and temperature, whereby vaporization of a substantial part of the toluene takes place and the required heat of vaporization is supplied by the heat transferred in the heat exchanger as sensible heat of the solution.

An important advantage of the method described herein is that it produces an isolated poly(phenylene ether) having a number average molecular weight of at least 15,000 grams per mole, or at least 18,00 grams per mole. In some embodiments, the number average molecular weight is 18,000 to 100,000 grams per mole, or 18,000 to 60,000 grams per mole, or 30,000 to 60,000 grams per mole. In some embodiments, the isolated poly(phenylene ether) can have a weight average molecular weight of at least 75,000 grams per mole, or at least 100,000 grams per mole, or 75,000 to 400,000 grams per mole, or 75,000 to 200,000 grams per mole. Number and weight average molecular weight can be determined by gel permeation chromatography in chloroform relative to polystyrene standards, as described in the working examples below.

A poly(phenylene ether) prepared according to the above described method represents another aspect of the present disclosure. The poly(phenylene ether) can comprise repeating structural units having the formula 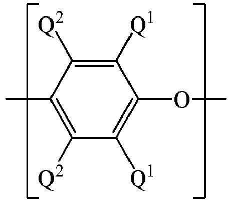 wherein Q¹ and Q² are as defined above. The hydrocarbyl residue can also contain one or more carbonyl groups, amino groups, hydroxyl groups, or the like, or it can contain heteroatoms within the backbone of the hydrocarbyl residue. As one example, Q¹ can be a di-n-butylaminomethyl group formed by reaction of a terminal 3,5-dimethyl-1,4-phenyl group with the di-n-butylamine component of an oxidative polymerization catalyst.

The poly(phenylene ether) can comprise molecules having aminoalkyl-containing end group(s), typically located in a position ortho to the hydroxy group. Also frequently present are tetramethyldiphenoquinone (TMDQ) end groups, typically obtained from 2,6-dimethylphenol-containing reaction mixtures in which tetramethyldiphenoquinone by-product is present. In some embodiments, the poly(phenylene ether) is substantially free of the quinone end groups. For example, the poly(phenylene ether) can include less than 1% of quinone end groups. The poly(phenylene ether) can be in the form of a homopolymer, a copolymer, a graft copolymer, an ionomer, or a block copolymer, as well as combinations thereof.

In a specific embodiments, the poly(phenylene ether) is a poly(2,6-dimethyl-1,4-phenylene ether).

Compositions and articles comprising the poly(phenylene ether) made by the above method represent another aspect of the present disclosure. For example, the poly(phenylene ether) made by the method described herein can be useful for forming a thermoplastic composition which can optionally comprises at least one of a thermoplastic polymer different from the poly(phenylene ether) and an additive composition comprising one or more additives. The one or more additives can be selected to achieve a desired property, with the proviso that the additive(s) are also selected so as to not significantly adversely affect a desired property of the thermoplastic composition. The additive composition or individual additives can be mixed at a suitable time during the mixing of the components for forming the composition. The additive can be soluble or non-soluble in poly(phenylene ether). The additive composition can include an impact modifier, flow modifier, filler (e.g., a particulate polytetrafluoroethylene (PTFE), glass, carbon, mineral, or metal), reinforcing agent (e.g., glass fibers), antioxidant, heat stabilizer, light stabilizer, ultraviolet (UV) light stabilizer, UV absorbing additive, plasticizer, lubricant, release agent (such as a mold release agent), antistatic agent, anti-fog agent, antimicrobial agent, colorant (e.g, a dye or pigment), surface effect additive, radiation stabilizer, flame retardant, anti-drip agent (e.g., a PTFE-encapsulated styreneacrylonitrile copolymer (TSAN)), or a combination thereof. For example, a combination of a heat stabilizer, mold release agent, and ultraviolet light stabilizer can be used. In general, the additives are used in the amounts generally known to be effective. For example, the total amount of the additive composition (other than any impact modifier, filler, or reinforcing agent) can be 0.001 to 10.0 wt%, or 0.01 to 5 wt%, each based on the total weight of the polymer in the composition.

The poly(phenylene ether) or a composition comprising the poly(phenylene ether) can be formed into articles by shaping, extruding, or molding. Articles can be molded from the composition by methods including, for example, injection molding, injection compression molding, gas assist injection molding, rotary molding, blow molding, compression molding, and the like. In some embodiments, articles can be formed by injection molding.

This disclosure is further illustrated by the following examples, which are nonlimiting.

### EXAMPLES

Materials used for the following examples are provided in Table 1.

**Table 1**

| Component | Description | Supplier |
|---|---|---|
| PPE-1 | A phenylene ether oligomer comprising repeating units derived from 2,6-dimethylphenol, having an intrinsic viscosity of 0.12 deciliter per gram and a number average molecular weight of 2,350 grams/mole, available as NORYL™ Resin SA120 | SABIC |
| PPE-2 | Poly(2,6-dimethyl-1,4-phenylene ether), CAS Reg. No. 25134-01-4, having an intrinsic viscosity of 0.40 deciliter per gram as measured in chloroform at 25°C; obtained as PPO 640 | SABIC |
| PPE-3 | Poly(2,6-dimethyl-1,4-phenylene ether), CAS Reg. No. 25134-01-4, having an intrinsic viscosity of 0.56 deciliter per gram as measured in chloroform at 25°C; obtained as PPO 805 | SABIC |
| Cu₂O | Cuprous oxide, CAS Reg. No. 1317-39-1 | American Chemet Corporation |
| HBr | Hydrobromic acid, CAS Reg. No. 10035-10-6 | Chemtura Corporation |
| DBEDA | Di-*tert*-butylethylenediamine, CAS Reg. No. 4062-60-6 | Achiewell LCC |
| DBA | Di-*n*-butylamine, CAS Reg. No. 111-92-2 | Oxea Corporation |
| DMBA | *N,N*-Dimethylbutylamine, CAS Reg. No. 927-62-8 | Oxea Corporation |
| DDAC | *N,N,N'N'-*Didecyldimethyl ammonium chloride, CAS Reg. No. 7173-51-5, available under the tradename MAQUAT 4450 | Mason Chemical Company |
| NTA | Nitrilotriacetic acid trisodium salt, CAS Reg. No. 5064-31-3 | Akzo Nobel Functional Chemicals |
| Methanol | Methanol, CAS Reg. No. 67-56-1 | Fisher Scientific |
| Toluene | Toluene, CAS Reg. No. 108-88-3 | Fisher Scientific |

Tests were conducted using a laboratory scale jacketed glass reactor with a bottom drain valve, an overhead agitator, a condenser, a dip tube for oxygen bubbling, and thermocouples. Nitrogen was present overhead.

The chemical structure and composition of the oligomers were determined by proton nuclear magnetic resonance (¹H NMR) analysis. All ¹H NMR spectra were acquired on a Varian Mercury Plus 400 instrument operating at an observe frequency of 400.14 MHz.

Intrinsic viscosity (IV) of the oligomers was examined using an Ubbelohde capillary type viscometer and stop watch. Different concentrations of oligomers were prepared in chloroform and measurements were done at 25 °C in a thermostatted water bath. The flow time data was used to calculate the intrinsic viscosity by extrapolating the reduced viscosity to zero concentration.

Weight average molecular weights were determined by gel permeation chromatography (GPC) in chloroform relative to polystyrene standards.

### Polymerization of PPE Oligomers

A bubbling polymerization reactor was loaded with 318.06 grams of toluene, 23.94 grams PPE-1, 0.2394 grams DBA, 3.1806 grams DMBA, 1.2607 grams of a diamine mixture of 30 wt% DBEDA, 7.5 wt% DDAC and the balance toluene, and the contents were stirred under nitrogen atmosphere. A mixture of 1.7671 grams HBr and 0.1402 grams Cu₂O was added. The temperature was ramped to 35 °C and oxygen flow was started to the reactor. The temperature was raised to 48 °C at 30 minutes and oxygen flow was maintained for 120 minutes, at which point the oxygen flow was stopped and the bubbling reactor contents were immediately transferred to a vessel containing 5.0376 grams NTA (20%) and 13.0699 g water. The solution was stirred at 60 °C for 2 hours and then it was left to decant. The decanted light phase was precipitated in methanol, filtered, reslurried in methanol and filtered again. The final dry powder was obtained after drying in a vacuum oven at 110 °C. Results are shown in Table 2.

**Table 2**

| Time (min) | Mn, g/mol (NMR) | IV, dl/g |
|---|---|---|
| 0 min | 2,495 | 0.120 |
| 30 min | 21,146 | -- |
| 60 min | 21,717 | -- |
| 90 min | 21,561 | -- |
| 120 min | 21,448 | -- |
| after chelation | 19,701 | 0.43 |

### Polymerization of PPE-2

A bubbling polymerization reactor was loaded with 237.5 grams of toluene, 12.5 grams PPE-2, 0.1645 grams DBA, 2.3703 grams DMBA, 0.089 grams of a diamine mixture of 30 wt% DBEDA, 7.5 wt% DDAC and the balance toluene, and the contents were stirred under nitrogen atmosphere. A mixture of 0.134 grams HBr and 0.0112 grams Cu₂O was added. The temperature was ramped to 35 °C and oxygen flow was started to the reactor. The temperature was raised to 48 °C at 30 minutes. The same amount of HBr and Cu₂O was added at 45 minutes and 100 minutes. Oxygen flow was maintained for 240 minutes, at which point the oxygen flow was stopped and the bubbling reactor contents were immediately transferred to a vessel containing 5.0 grams NTA (20%) and 13.0 grams water. The solution was stirred at 60 °C for 2 hours and then it was left to decant. The decanted light phase was precipitated in methanol, filtered, reslurried in methanol and filtered again. The final dry powder was obtained after drying in a vacuum oven at 110 °C. Results are shown in Table 3.

**Table 3**

| Time (min) | Mn, g/mol (GPC) | Mw (GPC) | PDI (GPC) | Mn, g/mol (NMR) | IV, dl/g |
|---|---|---|---|---|---|
| 0 | 18,665 | 48,742 | 2.61 | 15,242 | 0.40 |
| 30 | 30,808 | 73,652 | 2.40 | 23,286 | NA |
| 70 | 33,274 | 82,829 | 2.49 | 30,738 | NA |
| 100 | 33,346 | 83,192 | 2.49 | 33,193 | NA |
| 130 | 32,029 | 79,920 | 2.50 | 40,240 | NA |
| 170 | 32,469 | 83,526 | 2.57 | 48,109 | NA |
| after chelation | 33,424 | 86,788 | 2.60 | 59,338 | 0.80 |

### Polymerization of PPE-3

A bubbling polymerization reactor was loaded with 310 grams of toluene, 24 grams PPE-3, 0.24 grams DBA, 3.1881 grams DMBA, 1.2628 grams of a diamine mix consisting of 30 wt% DBEDA, 7.5 wt% DDAC and the balance toluene, and the contents were stirred under nitrogen atmosphere. A mixture of 1.7787 grams HBr and 0.1405 grams Cu₂O was added. The temperature was ramped to 35 °C and oxygen flow was started to the reactor. The temperature was raised to 48°C at 30 minutes and oxygen flow was maintained for 120 minutes, at which point the oxygen flow was stopped and the bubbling reactor contents were immediately transferred to a vessel containing 5.0 grams NTA (20%) and 13.0 grams water. The solution was stirred at 60 °C for 2 hours and then it was left to decant. The decanted light phase was precipitated in methanol, filtered, reslurried in methanol and filtered again. The final dry powder was obtained after drying in a vacuum oven at 110 °C. Results are shown in Table 4.

**Table 4**

| Time (min) | Mn, g/mol (GPC) | Mw, g/mol (GPC) | PDI (GPC) | Mn, g/mol (NMR) | IV, dl/g |
|---|---|---|---|---|---|
| 0 | 20,200 | 75,497 | 3.74 | NA | 0.56 |
| 60 | 47,872 | 196,884 | 4.13 | NA | 1.21 |
| 120 | 51,231 | 167,449 | 3.27 | NA | 1.17 |
| after chelation | 52,551 | 152,408 | 2.90 | NA | 1.08 |

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other. "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity, and are to be construed to cover both the singular and the plural, unless otherwise indicated herein or clearly contradicted by context. "Or" means "and/or" unless clearly stated otherwise. Reference throughout the specification to "some embodiments", "an embodiment", and so forth, means that a particular element described in connection with the embodiment is included in at least one embodiment described herein, and may or may not be present in other embodiments. The term "combination thereof' as used herein includes one or more of the listed elements, and is open, allowing the presence of one or more like elements not named. In addition, it is to be understood that the described elements may be combined in any suitable manner in the various embodiments.

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs. All cited patents, patent applications, and other references are incorporated herein by reference in their entirety. However, if a term in the present application contradicts or conflicts with a term in the incorporated reference, the term from the present application takes precedence over the conflicting term from the incorporated reference.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue. The term "alkyl" means a branched or straight chain, unsaturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more of a fluoro, chloro, bromo, or iodo substituent. A combination of different halo groups (e.g., bromo and fluoro), or only chloro groups can be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that can each independently be a C₁₋₉ alkoxy, a C₁₋₉ haloalkoxy, a nitro (-NO₂), a cyano (-CN), a C₁₋₆ alkyl sulfonyl (-S(=O)₂-alkyl), a C₆₋₁₂ aryl sulfonyl (-S(=O)₂-aryl), a thiol (-SH), a thiocyano (-SCN), a tosyl (CH₃C₆H₄SO₂-), a C₃₋₁₂ cycloalkyl, a C₂₋₁₂ alkenyl, a C₅₋₁₂ cycloalkenyl, a C₆₋₁₂ aryl, a C₇₋₁₃ arylalkylene, a C₄₋₁₂ heterocycloalkyl, and a C₃₋₁₂ heteroaryl instead of hydrogen, provided that the substituted atom's normal valence is not exceeded. The number of carbon atoms indicated in a group is exclusive of any substituents. For example - CH₂CH₂CN is a C₂ alkyl group substituted with a nitrile.

## Claims

1. A method for preparing a poly(phenylene ether), the method comprising:
oxidatively polymerizing a poly(phenylene ether) starting material having an initial intrinsic viscosity in the presence of an organic solvent and a copper-amine catalyst to form a reaction mixture comprising a poly(phenylene ether) having a final intrinsic viscosity that is at least 50% greater than the initial intrinsic viscosity, wherein the initial intrinsic viscosity and the final intrinsic viscosity are determined using an Ubbelohde viscometer at 25°C in chloroform;
terminating the oxidative polymerization to form a post-termination reaction mixture;
combining an aqueous solution comprising a chelant comprising an alkali metal salt of an aminopolycarboxylic acid with the post-termination reaction mixture to form a chelation mixture comprising
an aqueous phase comprising chelated copper ion, and
an organic phase comprising dissolved poly(phenylene ether);
separating the aqueous phase and the organic phase; and
isolating the poly(phenylene ether) from the organic phase.

2. The method of claim 1, wherein the poly(phenylene ether) starting material comprises a poly(phenylene ether) oligomer having an initial intrinsic viscosity of less than 0.2 deciliter per gram, preferably 0.15 deciliter per gram or less, more preferably 0.12 deciliter per gram or less, more preferably 0.1 deciliter per gram or less and the poly(phenylene ether) has a final intrinsic viscosity of greater than 0.20 deciliter per gram, preferably 0.25 to 0.60 deciliter per gram, or 0.3 to 0.5 deciliter per gram, or 0.3 to 0.45 deciliter per gram.

3. The method of claim 1, wherein the poly(phenylene ether) starting material comprises a poly(phenylene ether) having an initial intrinsic viscosity of 0.4 to 1.0 deciliter per gram, and the poly(phenylene ether) has a final intrinsic viscosity of greater than or equal to 0.80 deciliter per gram, preferably 0.90 to 1.5 deciliter per gram.

4. The method of any one of claims 1 to 3, wherein the oxidative polymerization is conducted in the absence of a phenolic monomer.

5. The method of any one of claims 1 to 4, wherein the organic solvent comprises toluene, benzene, chlorobenzene, or a combination thereof.

6. The method of any of claims 1 to 5, wherein the copper-amine catalyst comprises a copper ion and a hindered secondary amine,
preferably wherein the hindered secondary amine has the formula
R_{b}HN-Rₐ₋NHR_{c},
wherein Rₐ is C₂₋₄ alkylene or C₃₋₇ cycloalkylene and R_{b} and R_{c} are isopropyl or C₄₋₈ tertiary alkyl wherein only the α-carbon atom has no hydrogens, there being at least two and no more than three carbon atoms separating the two nitrogen atoms,
more preferably wherein the hindered secondary amine is di-*tert*-butylethylenediamine.

7. The method of claim 6, wherein the oxidative polymerization is further in the presence of a secondary monoamine, a tertiary monoamine, or a combination thereof, preferably wherein the secondary monoamine comprises di-*n*-butylamine and the tertiary monoamine comprises *N,N-*dimethylbutylamine.

8. The method of any of claims 1 to 7, wherein the oxidative polymerization is further in the presence of a bromide ion.

9. The method of any of claims 1 to 8, wherein the oxidative polymerization is further in the presence of a phase transfer agent, preferably wherein the phase transfer agent comprises a quaternary ammonium compound, a quaternary phosphonium compound, a tertiary sulfonium compound, or a combination thereof, more preferably wherein the phase transfer agent comprises *N,N,N'N'*-didecyldimethyl ammonium chloride.

10. The method of any of claims 1 to 9, wherein the chelant comprises an alkali metal salt of an aminoacetic acid, preferably an alkali metal salt of nitrilotriacetic acid, ethylene diamine tetraacetic acid, or a combination thereof, more preferably a sodium salt of nitrilotriacetic, a sodium salt of ethylene diamine tetraacetic acid, or a combination thereof.

11. The method of any of claims 1 to 10, wherein the oxidative polymerization is at a temperature of 20 to 70°C, preferably 30 to 60°C, more preferably 45 to 55°C.

12. The method of any of claims 1 to 11, wherein the poly(phenylene ether) starting material is present in an amount of 3 to 10 weight percent, based on the total weight of the poly(phenylene ether) starting material and the solvent.

## Patentansprüche

1. Verfahren zur Herstellung eines Poly(phenylenethers), wobei das Verfahren umfasst: oxidatives Polymerisieren eines Poly(phenylenether)-Ausgangsmaterials mit einer anfänglichen intrinsischen Viskosität bzw. Strukturviskosität in Gegenwart eines organischen Lösungsmittels und eines Kupfer-Amin-Katalysators unter Bildung eines Reaktionsgemisches, umfassend einen Poly(phenylenether) mit einer endgültigen intrinsischen Viskosität, die um mindestens 50% größer als die anfängliche intrinsische Viskosität ist, wobei die anfängliche intrinsische Viskosität und die endgültige intrinsische Viskosität unter Verwendung eines Ubbelohde-Viskosimeters bei 25 °C in Chloroform bestimmt werden;
Beenden der oxidativen Polymerisation unter Bildung eines Reaktionsgemisches nach Beendigung;
Kombinieren einer wässrigen Lösung, die einen Chelatbildner umfasst, welcher ein Alkalimetallsalz einer Aminopolycarbonsäure umfasst, mit dem Reaktionsgemisch nach Beendigung, um ein Chelatgemisch zu bilden, das
eine wässrige Phase, die ein chelatisiertes Kupferion umfasst, und
eine organische Phase, die gelösten Poly(phenylenether) umfasst, umfasst; Trennen der wässrigen Phase und der organischen Phase; und
Isolieren des Poly(phenylenethers) aus der organischen Phase.

2. Verfahren nach Anspruch 1, wobei das Poly(phenylenether)-Ausgangsmaterial ein Poly(phenylenether)-Oligomer mit einer anfänglichen intrinsischen Viskosität von weniger als 0,2 Deziliter pro Gramm, vorzugsweise 0,15 Deziliter pro Gramm oder weniger, bevorzugter 0,12 Deziliter pro Gramm oder weniger, bevorzugter 0,1 Deziliter pro Gramm oder weniger umfasst, und der Poly(phenylenether) eine endgültige intrinsische Viskosität von mehr als 0,20 Deziliter pro Gramm, vorzugsweise 0,25 bis 0,60 Deziliter pro Gramm, oder 0,3 bis 0,5 Deziliter pro Gramm, oder 0,3 bis 0,45 Deziliter pro Gramm hat.

3. Verfahren nach Anspruch 1, wobei das Poly(phenylenether)-Ausgangsmaterial einen Poly(phenylenether) mit einer anfänglichen intrinsischen Viskosität von 0,4 bis 1,0 Deziliter pro Gramm umfasst, und der Poly(phenylenether) eine endgültige intrinsische Viskosität von größer als oder gleich 0,80 Deziliter pro Gramm hat, vorzugsweise 0,90 bis 1,5 Deziliter pro Gramm.

4. Verfahren nach irgendeinem der Ansprüche 1 bis 3, wobei die oxidative Polymerisation in Abwesenheit eines phenolischen Monomers durchgeführt wird.

5. Verfahren nach irgendeinem der Ansprüche 1 bis 4, wobei das organische Lösungsmittel Toluol, Benzol, Chlorbenzol oder eine Kombination davon umfasst.

6. Verfahren nach irgendeinem der Ansprüche 1 bis 5, wobei der Kupfer-AminKatalysator ein Kupferion und ein gehindertes sekundäres Amin umfasst, vorzugsweise wobei das gehinderte sekundäre Amin die Formel
R_{b}HN-Rₐ-NHR_{c}
aufweist, wobei Rₐ C₂₋₄-Alkylen oder C₃₋₇-Cycloalkylen ist und R_{b} und R_{c} Isopropyl oder C₄₋₈-tertiäres Alkyl sind, wobei nur das α-Kohlenstoffatom keine Wasserstoffatome aufweist, wobei mindestens zwei und nicht mehr als drei Kohlenstoffatome die beiden Stickstoffatome trennen, bevorzugter wobei das gehinderte sekundäre Amin Di-tert-butylethylendiamin ist.

7. Verfahren nach Anspruch 6, wobei die oxidative Polymerisation ferner in Gegenwart eines sekundären Monoamins, eines tertiären Monoamins oder einer Kombination davon erfolgt, vorzugsweise wobei das sekundäre Monoamin Di-n-butylamin umfasst und das tertiäre Monoamin *N,N-*Dimethylbutylamin umfasst.

8. Verfahren nach irgendeinem der Ansprüche 1 bis 7, wobei die oxidative Polymerisation ferner in Gegenwart eines Bromidions erfolgt.

9. Verfahren nach irgendeinem der Ansprüche 1 bis 8, wobei die oxidative Polymerisation ferner in Gegenwart eines Phasentransfermittels erfolgt, vorzugsweise wobei das Phasentransfermittel eine quaternäre Ammoniumverbindung, eine quaternäre Phosphoniumverbindung, eine tertiäre Sulfoniumverbindung oder eine Kombination davon umfasst, bevorzugter wobei das Phasentransfermittel *N,N,N'N'*-Didecyldimethylammoniumchlorid umfasst.

10. Verfahren nach irgendeinem der Ansprüche 1 bis 9, wobei der Chelatbildner ein Alkalimetallsalz einer Aminoessigsäure, bevorzugter ein Alkalimetallsalz von Nitrilotriessigsäure, Ethylendiamintetraessigsäure oder eine Kombination davon umfasst, bevorzugter ein Natriumsalz von Nitrilotriessigsäure, ein Natriumsalz von Ethylendiamintetraessigsäure oder eine Kombination davon.

11. Verfahren nach irgendeinem der Ansprüche 1 bis 10, wobei die oxidative Polymerisation bei einer Temperatur von 20 bis 70 °C, vorzugsweise 30 bis 60 °C, bevorzugter 45 bis 55 °C, ist.

12. Verfahren nach irgendeinem der Ansprüche 1 bis 11, wobei das Poly(phenylenether)-Ausgangsmaterial in einer Menge von 3 bis 10 Gewichtsprozent, bezogen auf das Gesamtgewicht des Poly(phenylenether)-Ausgangsmaterials und des Lösungsmittels, vorliegt.

## Revendications

1. Procédé de préparation d'un poly(phénylène éther), le procédé comprenant :
la polymérisation oxydative d'une matière de départ de poly(phénylène éther) ayant une viscosité intrinsèque initiale en présence d'un solvant organique et d'un catalyseur cuivre-amine pour former un mélange réactionnel comprenant un poly(phénylène éther) ayant une viscosité intrinsèque finale qui est d'au moins 50 % supérieure à la viscosité intrinsèque initiale, la viscosité intrinsèque initiale et la viscosité intrinsèque finale étant déterminées par utilisation d'un viscosimètre Ubbelohde à 25 °C dans le chloroforme ;
la terminaison de la polymérisation oxydative pour former un mélange réactionnel post-terminaison ;
la combinaison d'une solution aqueuse comprenant un chélatant comprenant un sel d'un métal alcalin d'un acide aminopolycarboxylique avec le mélange réactionnel post-terminaison pour former un mélange de chélation comprenant
une phase aqueuse comprenant un ion cuivre chélaté, et une phase organique comprenant du poly(phénylène éther) dissous ;
la séparation de la phase aqueuse et de la phase organique ; et
l'isolement du poly(phénylène éther) de la phase organique.

2. Procédé selon la revendication 1, dans lequel la matière de départ de poly(phénylène éther) comprend un oligomère de poly(phénylène éther) ayant une viscosité intrinsèque initiale inférieure à 0,2 décilitre par gramme, de préférence de 0,15 décilitre par gramme ou moins, plus particulièrement de 0,12 décilitre par gramme ou moins, plus particulièrement de 0,1 décilitre par gramme ou moins, et le poly(phénylène éther) a une viscosité intrinsèque finale supérieure à 0,20 décilitre par gramme, de préférence de 0,25 à 0,60 décilitre par gramme, ou de 0,3 à 0,5 décilitre par gramme, ou de 0,3 à 0,45 décilitre par gramme.

3. Procédé selon la revendication 1, dans lequel la matière de départ de poly(phénylène éther) comprend un poly(phénylène éther) ayant une viscosité intrinsèque initiale de 0,4 à 1,0 décilitre par gramme, et le poly(phénylène éther) a une viscosité intrinsèque finale supérieure ou égale à 0,80 décilitre par gramme, de préférence de 0,90 à 1,5 décilitre par gramme.

4. Procédé selon l'une des revendications 1 à 3, dans lequel la polymérisation oxydative est réalisée en l'absence d'un monomère phénolique.

5. Procédé selon l'une des revendications 1 à 4, dans lequel le solvant organique comprend du toluène, du benzène, du chlorobenzène ou une combinaison de ceux-ci.

6. Procédé selon l'une des revendications 1 à 5, dans lequel le catalyseur cuivre-amine comprend un ion cuivre et une amine secondaire à empêchement stérique,
de préférence dans lequel l'amine secondaire à empêchement stérique a la formule
R_{B}HN-Rₐ-NHR_{C},
dans laquelle Rₐ est un alkylène en C₂₋₄ ou un cycloalkylène en C₃₋₇ et R_{b} et R_{c} représentent chacun un isopropyle ou un alkyle tertiaire en C₄₋₈,
dans lequel seul l'atome de carbone alpha n'a pas d'hydrogènes, le nombre d'atomes de carbone séparant les deux atomes d'azote étant d'au moins deux et n'étant pas supérieur à trois,
plus particulièrement dans lequel l'amine secondaire à empêchement stérique est la di-tert-butyléthylènediamine.

7. Procédé selon la revendication 6, dans lequel la polymérisation oxydative est réalisée en outre en présence d'une monoamine secondaire, d'une monoamine tertiaire ou d'une combinaison de celles-ci, de préférence dans lequel la monoamine secondaire comprend la di-n-butylamine et la monoamine tertiaire comprend la *N,N*-diméthylbutylamine.

8. Procédé selon l'une des revendications 1 à 7, dans lequel la polymérisation oxydative est réalisée en outre en présence d'un ion bromure.

9. Procédé selon l'une des revendications 1 à 8, dans lequel la polymérisation oxydative est réalisée en outre en présence d'un agent de transfert de phase, de préférence dans lequel l'agent de transfert de phase comprend un composé de l'ammonium quaternaire, un composé du phosphonium quaternaire, un composé du sulfonium tertiaire ou une combinaison de ceux-ci, plus particulièrement dans lequel l'agent de transfert de phase comprend du chlorure de *N,N,N',N'*-didécyldiméthylammonium.

10. Procédé selon l'une des revendications 1 à 9, dans lequel le chélatant comprend un sel d'un métal alcalin d'un acide aminoacétique, de préférence un sel d'un métal alcalin de l'acide nitrilotriacétique, de l'acide éthylènediaminetétraacétique, ou une combinaison de ceux-ci, plus particulièrement un sel de sodium de l'acide nitrilotriacétique, un sel de sodium de l'acide éthylènediaminetétraacétique ou une combinaison de ceux-ci.

11. Procédé selon l'une des revendications 1 à 10, dans lequel la polymérisation oxydative est réalisée à une température de 20 à 70 °C, de préférence de 30 à 60 °C, plus particulièrement de 45 à 55 °C.

12. Procédé selon l'une des revendications 1 à 11, dans lequel la matière de départ de poly(phénylène éther) est présente en une quantité de 3 à 10 pourcents en poids par rapport au poids total de la matière de départ de poly(phénylène éther) et du solvant.
